# EUROPÄISCHE PATENTSCHRIFT

(11) **EP 3 024 099 B1**
(45) Veröffentlichungstag und Bekanntmachung des Hinweises auf die Patenterteilung: **10.06.2020**
(21) Anmeldenummer: 14193609.6
(22) Anmeldetag: 18.11.2014
(51) Int. Cl.: H01R 43/052, B25J 9/16

(54) **Kabelbearbeitungseinrichtung**
Cable processing device
Dispositif de traitement de câble

(43) Veröffentlichungstag der Anmeldung: 25.05.2016
(73) Patentinhaber: Komax Holding AG, 6036 Dierikon (CH)
(72) Erfinder: Viviroli, Stefan, 6048 Horw (CH); Flury, Peter, 6222 Gunzwil (CH); Agustoni, Thomas, 6033 Buchrain (CH)
(74) Vertreter: Inventio AG

(56) Entgegenhaltungen:
- EP-A1- 0 290 641
- EP-A1- 1 169 754
- EP-A1- 1 341 269
- EP-B1- 1 169 754
- DE-A1-102011 102 274

## Beschreibung

Die Erfindung betrifft eine Kabelbearbeitungseinrichtung gemäss dem Oberbegriff von Anspruch 1. Weiterhin betrifft die Erfindung ein Verfahren für den Betrieb einer Kabelbearbeitungseinrichtung.

Bei der Konfektionierung von Kabeln werden Kabelenden der Kabel gecrimpt oder auf andere Weise bearbeitet. Unter "Crimpen" versteht man die Herstellung einer nicht lösbaren elektrischen und mechanischen Verbindung (Crimpverbindung) durch plastische Deformation zwischen einem Leiter und einem Crimpkontakt. Für höhere Anforderung hinsichtlich Dichtheit können die absiolierten Kabelenden vor dem Crimpen in Tüllenstationen mit Tüllen bestückt werden.

Eine gattungsmässig vergleichbare Kabelbearbeitungseinrichtung ist aus der EP 1 447 888 A1 bekannt geworden. Die EP 1 447 888 A1 zeigt eine Kabelbearbeitungseinrichtung mit einer Abisoliereinheit und zwei Crimpstationen mit Crimppressen. Die Vorrichtung verfügt weiter über einen als Bandantrieb ausgebildeten Kabelvorschub zum Bewegen des Kabels entlang einer Maschinenlängsachse. Die Abisoliereinheit zum Ablängen und Abisolieren der Kabelenden ist auf der Maschinenlängsachse angeordnet. Da sich die beiden Crimppressstationen jedoch neben der Maschinenlängsachse befinden, muss das Kabel mittels mit Greifern versehenen Schwenkarmen von Schwenkeinheiten zu den jeweiligen Crimppressen der Crimpstationen geführt werden, weshalb dieser Typ von Kabelbearbeitungseinrichtungen dem Fachmann auch unter der Bezeichnung "Schwenkmaschinen" bekannt und geläufig ist. In der ersten Crimppresse wird dabei das voreilende Kabelende und mit der zweiten Crimppresse das nacheilende Kabelende mit Crimpkontakten bestückt. Über eine zentrale Bedieneinheit lässt sich die Kabelbearbeitungseinrichtung überwachen und steuern.

Die EP 1 341 269 A1 betrifft wie das vorgenannte Dokument eine als Schwenkmaschine ausgeführte Kabelbearbeitungseinrichtung mit einer Abisoliereinheit und Crimpstationen mit Crimppressen. Die Crimppresse weist ein Bedienterminal mit einem Drehknopf und Tasten zur Eingabe von Betriebsdaten und Befehlen an eine Steuerung auf.

Ein weiter bekannter Typ von Kabelbearbeitungseinrichtungen sind die sogenannten "Linearmaschinen" oder "Transfermaschinen". Bei diesen Kabelbearbeitungsmaschinen sind die jeweiligen Kabelbearbeitungsstationen auf einer Linie entlang der Maschinenhauptachse angeordnet. Eine derartige Kabelbearbeitungseinrichtung ist zum Beispiel aus der EP 1 073 163 A1 bekannt geworden, wobei auch diese Kabelbearbeitungseinrichtung über eine zentrale Bedieneinheit verfügt.

Die zentralen Bedieneinheiten der bekannten Kabelbearbeitungseinrichtungen haben sich in Bezug auf den Produktionsbetrieb bewährt. Prozessparameter lassen sich mit der zentralen Bedieneinheit einfach einstellen und überwachen. Vor der massenweisen Fertigung konfektionierter Kabel müssen die einzelnen Bearbeitungsstationen jedoch eingerichtet werden. Je nach zu verarbeitenden Kabeln, Crimpkontakten und/oder Tüllen müssen Maschineneinstellungen an die unterschiedlichen Anforderungen angepasst werden. Dieser Einrichtprozess ist insbesondere in Bezug auf die Crimpstationen besonders wichtig, da die zu verarbeitenden Kabelenden möglichst präzise im Crimpwerkzeug einer Crimppresse der Crimpstation positioniert sein müssen. Das Einrichten kann auch nach einem Wechsel des Crimpwerkzeugs nötig sein. Das Bedienpersonal kontrolliert dabei visuell, ob die vorgenommenen Einstellungen richtig sind. Dazu müssen einzelne Bearbeitungsprozesse testweise durchgeführt werden. Das Auslösen erfolgt über die zentrale Bedieneinheit, weshalb das Bedienpersonal zwischen der zentralen Bedieneinheit und den Bearbeitungsstationen hin- und hergehen muss. Ein weiteres Problem besteht darin, dass insbesondere bei Anwesenheit von zwei Bedienpersonen sich das Gefahrenpotential erhöht, da durch von der zentralen Bedieneinheit ausgelöste Bearbeitungsprozesse der sich bei der Bearbeitungsstation befindliche Bediener gefährdet ist.

Die EP 1 169 754 A0 bzw. WO 00/62381 A1 zeigt ein System mit zwei gleichberechtigten Kabelbearbeitungsmaschinen, die über eine Datentransfereinheit miteinander verbunden sind. Jede Kabelbearbeitungsmaschine umfasst eine eigene Programmsteuerung, die durch Keyboards beeinflussbar ist.

In der EP 290 641 A1 ist eine Kabelbearbeitungseinrichtung mit Bearbeitungsstationen und einer zentralen Bedieneinheit gezeigt.

Es ist deshalb eine Aufgabe der vorliegenden Erfindung, die Nachteile des Bekannten zu vermeiden und insbesondere eine Kabelbearbeitungseinrichtung zu schaffen, die im Hinblick auf das Einrichten der Kabelbearbeitungseinrichtung einfach und sicher zu bedienen ist.

Erfindungsgemäss wird diese Aufgabe mit einer Kabelbearbeitungseinrichtung mit den Merkmalen des Anspruchs 1 gelöst. Die Kabelbearbeitungseinrichtung dient insbesondere zur Konfektionierung von Kabeln und umfasst Bearbeitungsstationen zum Bearbeiten von Kabelenden der Kabel. Als Bearbeitungsstationen kommen beispielsweise Abisolierstationen, Tüllenstationen und Crimpstationen in Frage. Die Kabelbearbeitungseinrichtung umfasst eine zentrale Bedieneinheit, über die wenigstens in Bezug auf den Produktionsbetrieb die Bearbeitungsstationen ansteuerbar und kontrollierbar sind. Dadurch, dass wenigstens eine der Bearbeitungsstationen, beispielsweise eine Crimpstation, eine lokale Bedieneinheit zum lokalen Einrichten der jeweiligen Bearbeitungsstation aufweist, lässt sich der Einrichtvorgang schnell, sicher und einfach durchführen. Dank der lokalen Bedieneinheit ist es möglich, die Einrichtungsarbeiten direkt an der jeweiligen Bearbeitungsstation auszuführen. Eine visuelle Kontrolle der Zwischenergebnisse der einzelnen Arbeitsschritte beim Einrichten ist jederzeit gewährleistet. Da auf die zentrale Bedieneinheit beim Einrichten nicht zurückgegriffen werden muss, entfallen Wechsel zwischen lokaler Bedieneinheit und zentraler Bedieneinheit. Somit kann die Bearbeitungsstation in effizienter Wiese eingerichtet werden.

Vorteilhaft ist es, wenn eine lokale Bedieneinheit wenigstens einer der Bearbeitungsstationen Eingabemittel zum Zustimmen, ob ein Bearbeitungsprozess ausgeführt werden soll, umfasst. Das genannte Eingabemittel kann beispielsweise eine Zustimmtaste sein. Alternativ zu taktilen Eingabemitteln wären aber auch andere Eingabemittel wie etwa eine berührungssensitive Bildschirmoberfläche denkbar. Die Zustimmung könnte aber auch auf andere Weise, zum Beispiel über Sprachbefehle an entsprechende Eingabemittel, erfolgen.

Besonders vorteilhaft ist es, wenn die Eingabemittel zum Zustimmen, ob ein Bearbeitungsprozess ausgeführt werden soll, derart örtlich von Eingabemitteln zum Auslösen des Bearbeitungsprozesses getrennt sind, dass die vorerwähnten Eingabemittel nicht gleichzeitig von einer Hand anwälbar sind. Auf diese Weise kann die Personensicherheit erhöht werden, da beim Einrichten beispielsweise eine Hand der Bedienperson nicht in die Crimppresse geraten und sich der Bediener verletzen kann. Das Eingabemittel zum Auslösen des Bearbeitungsprozesses kann beispielsweise eine Auslösetaste sein.

Die Eingabemittel zum Auslösen des Bearbeitungsprozesses und die Eingabemittel zum Zustimmen, ob der Bearbeitungsprozess ausgeführt werden soll, können wenigstens 27cm voneinander entfernt sein. Dadurch wird auf einfache Weise eine örtliche Trennung der beiden Eingabemittel erreicht, um eine einhändige Bedienung im Hinblick auf das Auslösen des Bearbeitungsprozesses zu verhindern.

In einer weiteren Ausführungsform weist eine lokale Bedieneinheit wenigstens einer der Bearbeitungsstationen Eingabemittel zum Zustimmen, ob ein Bearbeitungsprozess ausgeführt werden soll und Eingabemittel zum Auslösen des Bearbeitungsprozesses umfasst, wobei nur bei gleichzeitigem Anwählen der beiden genannten Eingabemitteln der Bearbeitungsprozess in der jeweiligen Bearbeitungsstation startbar ist. Die einhändige Bedienung ist dadurch praktisch ausgeschlossen.

Die Kabelbearbeitungseinrichtung kann als Bearbeitungsstation eine Crimpstation zur Herstellung einer Crimpverbindung mit einer Crimppresse enthalten. Dabei kann die Crimpstation Eingabemittel zum Zustimmen, ob ein Bearbeitungsprozess ausgeführt werden soll, zum Beispiel eine Zustimmtaste, umfassen. Weiterhin könnte die Crimpstation eine Auslösetaste umfassen. Mit der Auslösetaste lässt sich ein Crimpvorgang initiieren, wobei allerdings erst nach Drücken beispielsweise einer Zustimmtaste, mit der überprüft wird, ob ein an sich schon ausgelöster Bearbeitungsprozess tatsächlich ausgeführt werden soll, der Crimpvorgang gestartet wird.

Weitere Vorteile ergeben sich, wenn eine lokale Bedieneinheit wenigstens eine der Bearbeitungsstationen und vorzugsweise wenigstens die Crimpstation jeweils Eingabemittel zum Ansteuern einer Zuführeinheit zum Zuführen eines Kabelendes des Kabels zur jeweiligen Bearbeitungsstation, beispielsweise zur Crimpstation, und vorzugsweise zum Ansteuern einer Abisolierstation zum vorgängigen Ablängen und Abisolieren des Kabelendes, bevor das Kabelende zur Bearbeitungsstation (z.B. zur Crimpstation) geführt wird, umfasst. Mit einer solchen Ausgestaltung einer Kabelbearbeitungseinrichtung kann der Einrichtvorgang weiter vereinfacht und beschleunigt werden. Das hier genannte Eingabemittel kann zum Beispiel eine Kabelruftaste sein. Die Steuerung der Kabelbearbeitungseinrichtung ist derart ausgestaltet, dass nach oder durch Drücken der Kabelruftaste das Kabelende automatisch zuerst je nach Bedarf in der Abisolierstation abgelängt und abisoliert wird und dann zur entsprechenden Bearbeitungsstation geführt wird, worauf der Bediener mit den Einrichtungsarbeiten an der jeweiligen Bearbeitungsstation beginnen kann. Die Steuerung der Kabelbearbeitungseinrichtung kann dabei vorteilhaft derart ausgestaltet sein, dass nur bei gleichzeitigem Drücken der Kabelruftaste und der Zustimmtaste der Zuführvorgang startbar ist.

Besonders vorteilhaft ist es, wenn die Zuführeinheit eine um eine vertikale Achse drehbare Schwenkeinheit mit einem Greifer umfasst. Mit einer als Schwenkmaschine ausgestalteten Kabelbearbeitungseinrichtung hat das automatisierte Zuführen mit der Kabelruftaste besondere Vorteile. Die Kabelbearbeitungseinrichtung kann aber auch als Transfermaschine ausgestaltet sein. Eine derartige Kabelbearbeitungseinrichtung kann eine Zuführeinheit mit einer Transfereinheit mit einem entlang einer Maschinenlängsachse bewegbaren Greifer zum Transportieren des Kabels umfassen. Anstelle eines Greifers, beispielsweise eines Auszugsgreifers, wären aber auch andere Fördermittel, wie etwa ein Bandantrieb, denkbar. Die Bearbeitungsstationen, beispielsweise eine Abisolierstation sowie eine erste Crimpstation für das nacheilende Kabelende und eine zweite Crimpstation für das voreilende Kabelende sowie weitere Bearbeitungsstationen (wie etwa Tüllenstationen) können hintereinander auf der Maschinenlängsachse in einer Linie angeordnet sein. Die Abisoliereinheit kann beispielsweise in Bezug auf die Förderrichtung bzw. entlang der Maschinenlängsachse zwischen erster und zweiter Crimpstation angeordnet sein. Der translatorisch bewegbare Auszugsgreifer kann zusätzlich auch quer zur Maschinenlängsachse, beispielsweise zum vertikalen Positionieren der Kabelenden für einen Bearbeitungsprozess, bewegbar und insbesondere rechtwinklig zur Maschinenlängsachse verschiebbar sein.

Wenn die Kabelbearbeitungseinrichtung als Bearbeitungsstation eine Crimpstation zur Herstellung einer Crimpverbindung mit einer Crimppresse enthält, kann es vorteilhaft sein, wenn die Crimpstation ein lokale Bedieneinheit mit Eingabemitteln zum Einstellen der axialen und/oder horizontalen Position eines ein Kabelende des Kabels haltenden Greifers einer Zuführeinheit in der Crimppresse der Crimpstation umfasst. Der zeitliche Aufwand für die Einrichtung der Kabelbearbeitungseinrichtung lässt sich so weiter erheblich reduzieren.

Zur weiteren Erhöhung der Personensicherheit ist es vorteilhaft, wenn wenigstens ein Bereich der Kabelbearbeitungseinrichtung mit einer Schutzhaube gesichert oder sicherbar ist und wenn optische oder akustische Warn- und Benutzerführungselemente vorgesehen sind, die anzeigen, wenn sich die Schutzhaube in einer offenen Stellung befindet und die gegebenenfalls, falls optische Warn- und Benutzerführungselemente vorgesehen sind, wenigstens einen Teilbereich des erwähnten Bereichs der Kabelbearbeitungseinrichtung beleuchten können. Ein solcher Teilbereich kann beispielsweise der Bereich um einen Messerkopf mit Abisoliermessern einer Abisolierstation sein. Zum sicheren Arbeiten an einer Abisolierstation kann es vorteilhaft sein, wenn die optische Warn- und Benutzerführungselemente die gefährliche Stelle mit dem Messerkopf beleuchten bzw. beleuchten können. Hierzu kann beispielsweise eine mit einem oder mehreren Leuchmitteln ausgestattete Lampe eingesetzt werden.

Eine lokale Bedieneinheit wenigstens einer der Bearbeitungsstationen kann über Anzeigemittel, beispielsweise optische, akustische oder haptische Anzeigemittel, zum Anzeigen von Betriebszuständen verfügen. Die Anzeigemittel helfen dem Bedienpersonal, schnell Informationen zu den Betriebszuständen zu erhalten.

Die Anzeigemittel können besonders vorteilhaft Leuchtelemente zum Anzeigen eines Bereitschaftsmodus und der Anwesenheit des Kabels, in dem die jeweilige Bearbeitungsstation zum Einrichten bereit ist, und zum Anzeigen einer Fehlermeldung enthalten. Dabei können die Leuchtelemente bei Vorliegen des Bereitschaftsmodus sowie bei Anwesenheit des Kabels einerseits oder bei einer Fehlermeldung andererseits unterschiedlich, beispielsweise in unterschiedlichen Farben, leuchten. Sobald zum Beispiel das oder die Leuchtelemente anzeigen, dass die Bearbeitungsstation bereit und das Kabelende des Kabels bei oder vor der Bearbeitungsstation anwesend ist, weiss der Benutzer, dass ab diesem Zeitpunkt (bzw. mit der Anwesenheitsmeldung) der Bearbeitungsprozess an der Bearbeitungsstation durchgeführt werden kann.

Ein weiterer Aspekt der Erfindung betrifft ein Verfahren für den Betrieb einer Kabelbearbeitungseinrichtung mit Bearbeitungsfunktion und für den Betrieb der vorgängig beschriebenen Kabelbearbeitungseinrichtung. Das Verfahren zeichnet sich dadurch aus, dass wenigstens eine der Bearbeitungsstationen mittels einer an der jeweiligen Bearbeitungsstation vorhandenen lokalen Bedieneinheit eingerichtet wird.

Vorteilhaft ist es, wenn nach oder durch Betätigen eines, an wenigstens einer der Bearbeitungsstationen angeordneten, Eingabemittels einer lokalen Bedieneinheit zum Ansteuern einer Zuführeinheit zum Zuführen eines Kabelendes das Kabels zur jeweiligen Bearbeitungsstation herangeführt und vorzugsweise zusätzlich zum Ansteuern einer Abisolierstation zum vorgängigen Ablängen und Abisolieren des Kabelendes, bevor das Kabelende zur Bearbeitungsstation gelangt, wird. Beispielsweise kann nach oder durch Drücken einer Kabelruftaste zum Zuführen des Kabelendes zur jeweiligen Bearbeitungsstation das Kabelende in der der Abisolierstation abgelängt und abisoliert und dann zur betreffenden Bearbeitungsstation heran geführt und dort in eine Ausgangsstellung gebracht werden, von der aus die jeweilige Bearbeitungsstation (beispielsweise die Crimpstation) individuell eingerichtet werden kann.

Wenn das Kabelende beim Zuführvorgang zum Zuführen des Kabelendes zur jeweiligen Bearbeitungsstation (beispielsweise die Crimpstation) eine vorgelagerte Bearbeitungsstation (beispielsweise eine Tüllenstation) passiert, kann durch Einwirken auf das Eingabemittel der Zuführvorgang gestoppt und das Kabelende zur vorgelagerten Bearbeitungsstation heran geführt werden. Angenommen, wenn zum Beispiel das Kabelende auf dem Weg zur Crimpstation die Tüllenstation passiert, kann der Benutzer eine Art "Zwischenstopp" an der Tüllenstation erwirken. Bei diesem Zwischenstopp kann die Tüllenstation oder je nachdem eine andere Bearbeitungsstation eingerichtet werden. Danach kann der ursprüngliche Zuführvorgang wieder fortgesetzt und beendet werden. Wenn für den Zuführvorgang die Kabelruftaste als beispielhaftes vorerwähntes Eingabemittel gedrückt gehalten werden muss, kann beispielsweise das vorerwähnte Einwirken auf das Eingabemittel für den Zwischenstopp ein Loslassen oder Freigeben der Kabelruftaste sein.

Zum Beispiel kann die Steuerung derart ausgestaltet sein, dass für den Zuführvorgang für die Crimpstation die Kabelruftaste solange gedrückt gehalten werden muss, bis das Kabelende bzw. der das Kabelende haltende Greifer die gewünschte Zielbearbeitungsstation (d.h. die Crimpstation) errreicht hat. In diesem Fall kann beim Passieren der Tüllenstation durch Loslassen oder Freigeben der Kabelruftaste der Zuführvorgang der Zwischenstopp erwirkt werden.

Weitere Vorteile und Einzelmerkmale ergeben sich aus der nachfolgenden Beschreibung eines Ausführungsbeispiels und aus den Zeichnungen. Es zeigen:
- Figur 1: eine Draufsicht auf eine Kabelbearbeitungseinrichtung,
- Figur 2: eine perspektivische Darstellung einer Crimpstation der Kabelbearbeitungseinrichtung aus Figur 1,
- Figur 3: eine Detailansicht auf eine lokale Bedieneinheit der Crimpstation gemäss Figur 2, und
- Figur 4: einen Ausschnitt auf die Kabelbearbeitungeinrichtung gemäss Figur 1 in einer perspektivischen Darstellung.

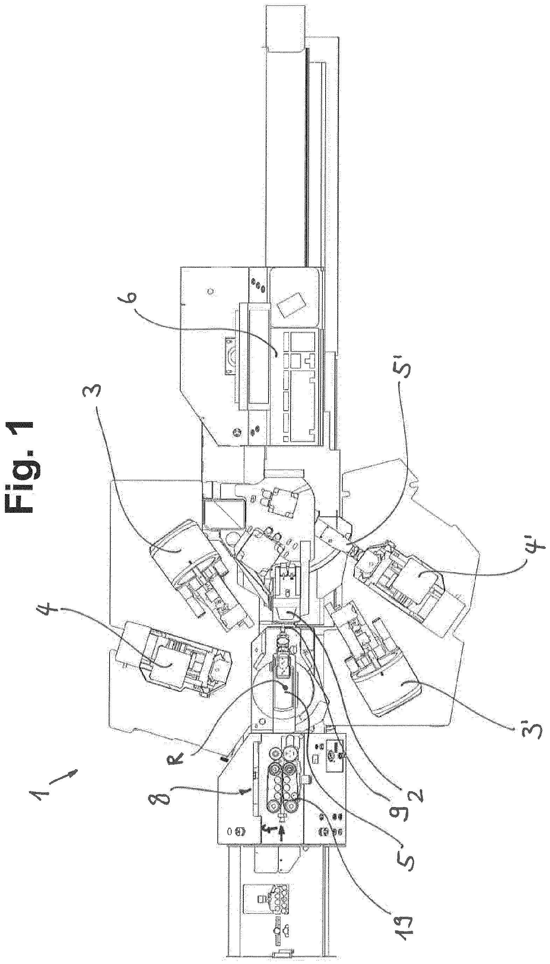

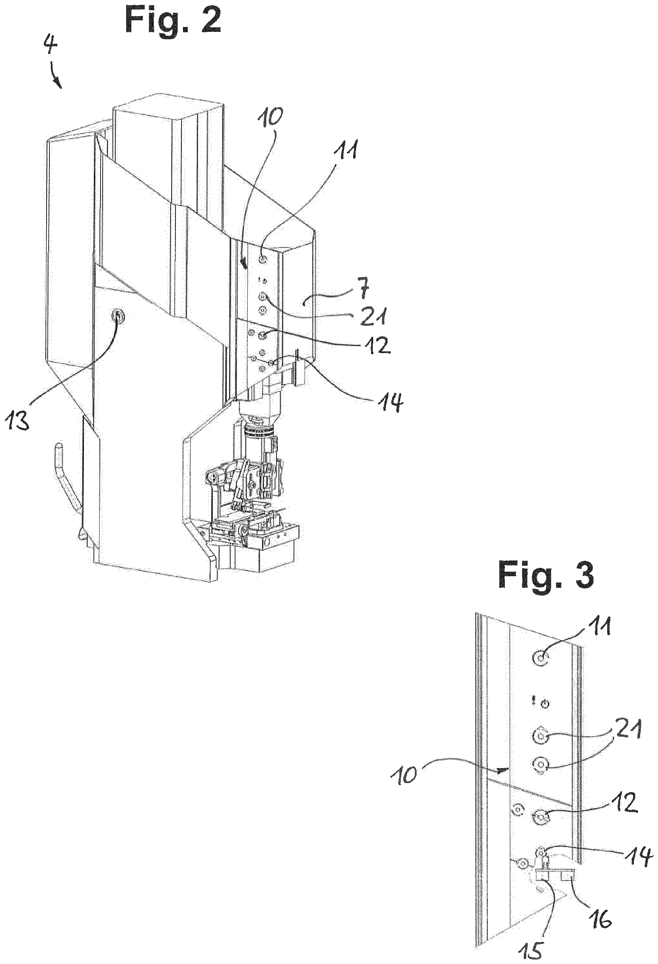

Figur 1 zeigt eine insgesamt mit 1 bezeichnete, als Schwenkmaschine ausgeführte Kabelbearbeitungseinrichtung zum Konfektionieren von (hier nicht dargestellten) Kabeln. Die Kabelbearbeitungseinrichtung 1 umfasst eine Zuführeinheit 8 mit einem als Bandförderer ausgestalteten Kabelfördermittel 19, welches die Kabel entlang der Maschinenlängsachse in f-Richtung zur Schwenkeinheit 5 bringt. Die Schwenkeinheit 5 verfügt über einen Greifer 9 zum Halten des Kabels. Eine Abisolierstation 2 zum Ablängen und Abisolieren der Kabel ist ersichtlicherweise auf der Maschinenlängsachse angeordnet. Die weiteren Bearbeitungsstationen 3 und 4 sind hingegen neben der Maschinenlängsachse angeordnet. Zum Zuführen der Kabelenden zu diesen Bearbeitungsstationen müssen die Schwenkeinheiten 5 um eine vertikale Achse gedreht werden. Die entsprechende Rotationsachse der ersten Schwenkeinheit 5 ist mit R bezeichnet. Bei der mit 3 bezeichneten Bearbeitungsstation handelt es sich um eine Tüllenstation und bei der mit 4 bezeichneten Bearbeitungsstation handelt es sich um eine Crimpstation. Die Bearbeitungsstationen 3 und 4 sind dabei dem vorauseilenden Kabelende zugeordnet; die Bearbeitungsstationen 3' und 4' dienen zur Konfektionierung der nacheilenden Kabelenden. Die mit 5' bezeichnete zweite Schwenkeinheit befindet sich in Figur 1 in einer ausgeschwenkten Stellung. Zusätzlich oder alternativ wären als Bearbeitungsstationen auch Bestückungsstationen zum Bestücken von Kabelenden mit Steckergehäusen vorstellbar. Solche Bestückungsstationen sind zum Beispiel in der EP 1 251 605 A1 beschrieben. Der Produktionsbetrieb wird über eine zentrale Bedieneinheit 6 kontrolliert und überwacht. Die zentrale Bedieneinheit 6 ist mit einer (nicht dargestellten) Steuerung verbunden, über die die einzelnen Bearbeitungsstationen und Maschinenkomponenten für den Betrieb der Kabelbearbeitungseinrichtung 1 zur massenweisen Fertigung von konfektionierten Kabeln ansteuerbar sind. Die Crimpstationen 4 und 4' sind mit speziellen Bedieneinheiten ausgerüstet, mit denen sich die jeweiligen Bearbeitungsstationen lokal einrichten lassen. Figur 2 zeigt eine solche lokale Bedieneinheit für die Crimpstation, die hier mit 10 bezeichnet ist. Damit werden die vom Bediener beim Einrichten zurückzulegenden Wege und der Zeitbedarf reduziert. Mit derartigen oder wenigstens ähnlichen lokalen Bedieneinheiten könnten aber auch die anderen Bearbeitungsstationen (d.h. die Tüllenstationen und die Abisolierstationen) ausgerüstet sein.

Die in Figur 2 dargestellte Crimpstation 4 der Kabelbearbeitungseinrichtung weist eine Crimppresse 7 zum Verbinden eines Kabelendes mit einem Crimpkontakt auf. Die an sich schon bekannte Crimppresse 7 weist einen mittels eines Motors antreibbaren und in vertikaler Richtung auf und ab bewegbaren Werkzeughalter auf. Zwischen dem Werkzeughalter und einer Konsole der Crimppresse ist ein Crimpwerkzeug eingesetzt. Das Crimpwerkzeug enthält einen Amboss und einen Crimpstempel zum Erstellen der Crimpverbindung. Derartige oder vergleichbare Crimppressen und Crimpwerkzeuge sind dem Fachmann an sich bekannt. Hinsichtlich des Aufbaus und der Wirkungsweise von Crimppresse und Crimpwerkzeugen wird beispielhaft auf die EP 1 341 269 A1 verwiesen. Die vorliegende Crimpstation 4 zeichnet sich dadurch aus, dass sie eine lokale Bedieneinheit 10 zum Einrichten der Crimppresse aufweist. Die lokale Bedieneinheit 10 umfasst ein Bedienpanel im Bereich einer Vorderseite der Crimppresse 7. Auf diesem Bedienpanel sind mehrere Tasten 11, 12, 14 angeordnet, deren Funktion nachfolgend im Detail beschrieben wird. Weiterhin umfasst die lokale Bedieneinheit 10 eine nachfolgend näher erläuterte Taste 13 an einer Seitenwand der Crimpstation 4 in der Nähe von einer Rückseite der Crimpstation 4.

Die Funktionsweise der genannten Tasten der lokale Bedieneinheit 10 ist wie folgt: Mit der mit 11 bezeichneten Taste kann ein Bearbeitungsprozess, im Falle der Crimppresse folglich ein Crimpprozess, initialisiert werden. Diese Taste 11 wird daher als Auslösetaste bezeichnet. Für eine sichere Durchführung des Einrichtprozesses ist die Taste 13 vorgesehen. Diese Taste 13 ist eine Zustimmtaste zum Zustimmen, ob der Crimpprozess ausgeführt werden soll. Die Auslösetaste 11 und die Zustimmtaste 13 sind über die Steuerung derart elektronisch miteinander verbunden, dass nur bei gleichzeitigem Drücken der Tasten 11 und 13 der Crimpprozess startbar ist. Die Zustimmtaste 13 ist an der Crimppresse 7 derart, mit so viel Abstand zu den übrigen Bedienelementen angeordnet, dass nur eine Zweihandbedienung möglich ist. Da im Ausführungsbeispiel gemäss Figur 2 die Auslösetaste 11 und die Zustimmtaste 13 wenigstens 27 cm voneinander entfernt sind, ist sichergestellt, dass die Crimpstation 4 nicht einhändig von einer Person bedient werden kann. Die Steuerung der Kabelbearbeitungseinrichtung 1 führt Bewegungen der Crimppresse 7 erst aus, wenn zur Auslösetaste 11 gleichzeitig die lokale Zustimmtaste 13 gedrückt wird. Für bestimmte Anwendungen wäre es aber auch denkbar, auf das Erfordernis des gleichzeitigen Drückens der beiden vorgenannten Tasten zu verzichten. Die Steuerung könnte derart eingerichtet sein, dass zuerst die Auslösetaste 11 gedrückt werden muss und danach durch Drücken der Zustimmtaste 13 bestätigt wird, dass der mittels der Auslösetaste 11 ausgelöste Bearbeitungsprozess tatsächlich ausgeführt werden soll. Mit Hilfe von Kriechgang-Tasten 21 kann wunschgemäss das Aufwärtsbewegen und das Abwärtsbewegen der Crimppresse mit reduzierter Geschwindigkeit durchgeführt werden.

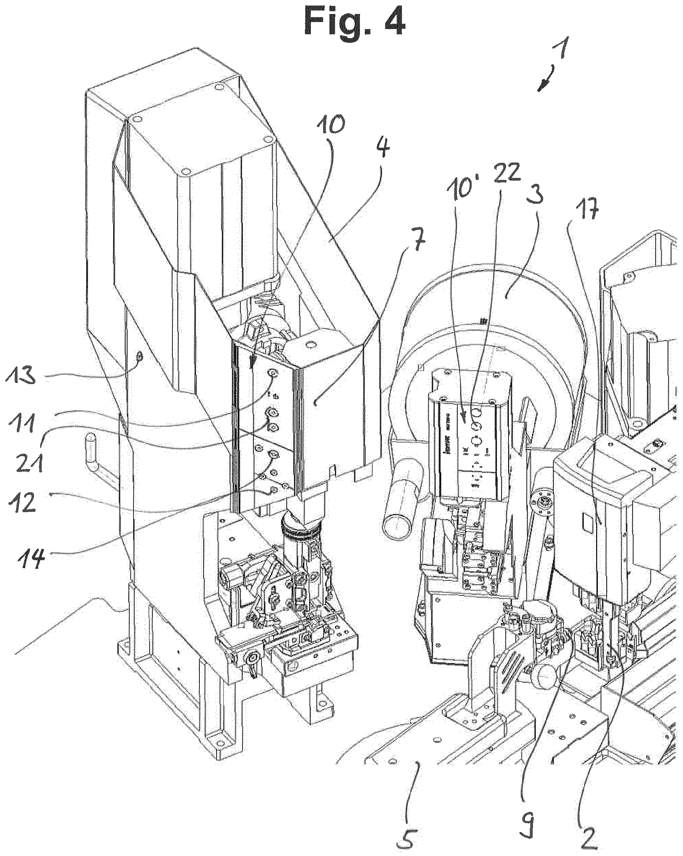

Die lokale Bedieneinheit 10 umfasst weiter eine Kabelruftaste 12 zum Ansteuern der Zuführeinheit zum Zuführen des Kabelendes des Kabels zur Crimpstation 4. Nach Drücken der Kabelruftaste 12 gelangen die Kabelenden zu einer vordefinierten Ausgangstellung oder beispielsweise zur zuletzt gespeicherten Greiferstellung. Die Kabel werden beim Zuführvorgang von einem Greifer (9) gehalten, um die vertikale Achse geschwenkt und allenfalls axial entlang der Kabelachse in Richtung des Crimpwerkzeugs verschoben (vgl. Figuren 1, 4). Nachdem sich die Kabelenden bzw. der die Kabelenden haltende Greifer in ihrer Ausgangstellung befinden, kann mit dem eigentlichen Einrichtvorgang zum Einrichten der Crimppresse 7 begonnen werden. Hierzu dienen die mit 14 bezeichneten vier Positioniertasten. Mit den oberen und unteren Positioniertasten 14 lässt sich der Greifer der Zuführeinheit nach oben und unten und somit dessen horizontale Position einstellen. Die Steuerung kann derart ausgestaltet sein, dass durch längeres Drücken auf eine Positioniertaste 14 jeweils die Geschwindigkeit um eine höhere Stufe erhöht wird. Die etwa auf gleicher Höhe nebeneinander liegenden Tasten 14 dienen zur Einstellung der axialen Position des Greifers. Dank der lokalen Kabelruftaste 12 kann der Benutzer das für das Einrichten notwendige Kabel zur Crimpstation 4 einfach holen, ohne dass er zur zentralen Bedieneinheit wechseln muss. Die Steuerung ist dabei vorteilhaft derart ausgestaltet, dass nur bei gleichzeitigem Drücken der Kabelruftaste 12 und der Zustimmtaste 13 der Zuführvorgang startbar ist.

Figur 3 zeigt eine Detailansicht auf das Bedienpanel der lokalen Bedieneinheit 10 der Crimpstation. Im Bereich der Positioniertasten 14 zum Einstellen der axialen und horizontalen Position des ein Kabelende des Kabels haltenden Greifers der Zuführeinheit ist die Panelwand teilweise ausgebrochen, wodurch die unter den Positioniertasten 14 angeordneten Leuchtelemente 15 und 16 erkennbar sind. Derartige Leuchtelemente können selbstverständlich auch unter den anderen Tasten zum Bedienen der lokalen Bedieneinheit 10 angeordnet sein. Auch hinter der Zustimmtaste 13 könnten derartige Leuchtelemente angeordnet sein. Die Tasten des Bedienpanels können so ausgeleuchtet werden. Die Leuchtelemente 15 und 16 bilden Anzeigemittel zum Anzeigen von Betriebszuständen und können verschieden leuchten; beispielsweise kann das Leuchtelement 15 rot und das Leuchtelement 16 weiss oder grün leuchten. Die Leuchtelemente 15, 16 können jeweils als Leuchtdioden ausgeführt sein. Das weiss oder grün leuchtende Leuchtelement 16 dient zum Anzeigen eines Bereitschaftsmodus, in dem die Bearbeitungsstation (i.e. Crimpstation 4) zum Einrichten bereit ist. Das rot leuchtende Leuchtelement 16 dient zum Anzeigen einer Fehlermeldung.

Das weiss oder grün leuchtende Leuchtelement 16 leuchtet, wenn das Kabel im Einrichtbetrieb vor der Crimpstation 4 steht, das Kabel also positioniert werden soll oder wenn der Prozess beispielsweise im Einzelzyklus oder Einzelschritt ausgeführt wird. Das Leuchtelement 16 kann zusätzlich oder alternativ weiss oder grün leuchten, wenn das Kabel sich beim Zuführen zu einer anderen Bearbeitungsstation in der Nähe der Crimpstation 4 befindet, um anzuzeigen, dass bei der Crimpstation 4 gestoppt werden kann, um auch dort die Bearbeitungsstation einzurichten. Das zweite Leuchtelement 16 leuchtet rot oder in einer anderen Farbe als weiss bzw. grün, wenn ein Prozessfehler im Automatik- bzw. Produktions- oder im Einrichtbetrieb auftritt. Prozessfehler können beispielsweise ein von der Crimpkraftüberwachung der Crimppresse erkannter ungenügender Crimp sein. In Bezug auf die Tüllenstation könnte ein Prozessfehler zum Beispiel eine von der Tüllenpositionsüberwachung der Tüllenstation erkannte schlecht positionierte Tülle sein. Die Anzeige des Prozessfehlers durch das Beleuchten der betroffenen Bearbeitungsstation mit andersfarbigem Licht hat den Vorteil, dass der Bediener bei einem Produktionsunterbruch mit einem Blick und ohne die Fehlermeldung auf dem Computerbildschirm konsultieren zu müssen, feststellen kann, bei welcher Bearbeitungsstation ein Fehler aufgetreten ist.

Die Tasten 11, 12, 14, 21 sind vorliegend in Form von runden Bedienknöpfen ausgestaltet. Selbstverständlich könnten die Tasten aber auch andere Tastenformen und -grössen aufweisen. Anstatt von Tasten zum Bedienen der lokalen Bedieneinheit 10 wären auch andere Eingabemittel denkbar. Als Eingabemittel kommen beispielsweise berührungssensitive Bildoberflächen in Frage. Eingabemittel könnten aber auch Schalter oder andere einem Computer zugeordnete Eingabemittel wie beispielsweise eine Maus umfassen.

Figur 4 zeigt einen Ausschnitt auf die Kabelbearbeitungseinrichtung 1 mit Schwenkeinheit 5 sowie den drei Bearbeitungsstationen: Abisoliereinheit 2, Tüllenstation 3 und Crimpstation 4. Neben der vorgängig beschriebenen mit einer lokalen Bedieneinheit 10 ausgerüsteten Crimpstation 4 kann auch die Tüllenstation 3 mit einer lokalen Bedieneinheit 10' zum Einrichten der Tüllenstation ausgerüstet sein. Die Tüllenstation 3 kann Tasten für den Einzelschrittbetrieb, zum Anfahren einer Werkzeugwechselposition und zum Verstellen der Tüllenförderung umfassen. In Figur 4 befindet sich der Greifer 9 zum Halten des Kabels der Schwenkeinheit 5 in einer axialen Stellung auf der Maschinenlängsachse vor der Abisolierstation 2.

Dank der lokalen Bedieneinheiten sind allfällige weitere Maschinenbediener besser geschützt, weil gefährliche Aktionen bei offener Schutzhaube nur noch lokal ausgelöst werden können. Durch entsprechende Gestaltung der Steuerung der Kabelbearbeitungsmaschine kann sichergestellt werden, dass gefährliche Aktionen bei offener Schutzhaube mittels der vorgängig beschriebenen lokalen Auslösetaste und lokalen Zustimmtaste lokal vorgenommen werden müssen. Die Steuerung der Kabelbearbeitungsmaschine kann derart ausgestaltet sein, dass bei offener Schutzhaube die zentrale Bedieneinheit in Bezug auf den Einrichtvorgang inaktiv ist. Die lokale Bedieneinheit hat den Vorteil, dass der Bediener den gesamten gefährlichen Prozess beim Einrichten überblicken kann. Ebenso würde dieser Bediener einem allfällig zweiten Bediener im Weg stehen, so dass Letzterer nicht mehr unbemerkt in den gefährlichen Bereich hineingreifen kann.

Aus Sicherheitsgründen verfügt Kabelbearbeitungseinrichtung 1 über (hier nicht dargestellte) Schutzhauben, die alle gefährlichen Elemente der Maschine, insbesondere den Kabelvorschub, den Schneidkopf der Abisolierstation, die Schwenkarme der Schwenkeinheit sowie die Tüllenstationen und die Crimpstationen, abdecken. Für das Einrichten der Maschine kann die Schutzhaube jeweils angehoben werden. Im Einrichtbetrieb muss es mit offener Schutzhaube möglich sein, alle Bewegungen der jeweiligen Maschine auszuführen und Bearbeitungszyklen der Bearbeitungsstationen auszulösen. Gefährliche Aktionen wie etwa an der Crimpstation 4 müssen bei offener Schutzhaube lokal mittels der Auslösetaste 11 und der Zustimmtaste 13 ausgelöst werden. Damit überblickt der Bediener den gesamten gefährlichen Prozess. Geeignete Anzeigemittel weisen den Bediener auf Gefahrenstellen hin und zeigen Prozessfehler an. Die Anzeigemittel können weiter die Prozesspositionen anzeigen. Gleichzeitig können die Anzeigemittel den Benutzer führen, indem sie zum geeigneten Zeitpunkt einschalten und damit signalisieren, dass der Benutzer die Kabelruftaste loslassen kann, wenn er die betreffende Bearbeitungsstation einrichten möchte. In diesem Fall ist die Steuerung derart ausgestaltet, dass das Kabel in der präzisen Prozessposition stoppen wird.

Um die Sicherheit beim Bearbeiten des Kabels mit geöffneter Schutzhaube in der Abisolierstation 2 zu erhöhen, verfügt der Schneidkopf der Abisolierstation 2 über ein Warn- und Benutzerführungselement 17. Das an der Abisolierstation 2 angeordnete Warnelement 17 kann anzeigen, wenn sich die (nicht dargestellte) Schutzhaube in einer Offenstellung befindet. Das Warn- und Benutzerführungselement 17 kann beispielhaft eine Reihe von orangen Leuchtdioden umfassen, die hinter einem Kunststoff-Fenster angeordnet sind. Das Warn- und Benutzerführungselement 17 kann kurz vor und während der Bearbeitung des Kabels mit dem Schneidkopf der Abisolierstation 2 (Trennen und Abisolieren des Kabels) blinken. Das Warn- und Benutzerführungselement 17 kann alternativ oder zusätzlich derart ausgestaltet sein, dass es den gefährlichen Bereich um einen Messerkopf mit den Abisoliermessern der Abisolierstation 2 beleuchtet, wodurch die potentiell gefährliche Situation durch Sichtbarmachung entschärft werden kann.

Der gesamte Einrichtvorgang zum Einrichten der ersten Crimpstation 4 läuft etwa wie folgt ab: Zunächst wird die (nicht dargestellte) Schutzhaube, die die Crimpprese 7 der Crimpstation 4 abdeckt, geöffnet. Danach drückt der Bediener an der Crimpstation 4 gleichzeitig die Kabelruftaste 12 und die Zustimmtaste 13, worauf das (nicht dargestellte) Kabel zur Crimpstation 4 hin geführt wird. Das Kabel wird nach Aktivieren des Zuführvorgangs bei Bedarf abgelängt und abisoliert. Die Schwenkeinheit 5 bringt beim Zuführen das Kabelende vor die Crimppresse 7 und stoppt an der letzten gespeicherten Position. Der Bediener kann jetzt die Kabelruftaste 12 und die Zustimmtaste 13 loslassen; falls er es vorher tut, bleibt die Maschine sofort stehen und fährt bei erneutem Drücken der Tasten weiter. Danach beginnt der eigentliche Einrichtvorgang. Der Bediener positioniert dabei das Kabelende mit den Positioniertasten 14. Anschliessend kann er mit der Auslösetaste 11 (eventuell mit zusätzlicher Anwahl der Kriechgangtasten) und gleichzeitig gedrückter Zustimmtaste 13 den Crimpvorgang auslösen und überprüfen. Wenn der Bediener einen Crimpzyklus ausgeführt hat, wird das Kabel danach automatisch aus dem Crimpwerkzeug zurückgezogen, damit es besser begutachtet werden kann.

Will der Bediener, nachdem die erste Crimpstation 4 fertig eingerichtet wurde, anschliessend die zweite Crimpstation (4') einrichten, drückt er an der zweiten Crimpstation die Kabelruftaste und die Zustimmtaste, worauf das Kabel mittels den Schwenkeinheiten um die gewünschte Kabellänge transportiert und zur zweiten Crimpstation hin geführt wird.

Danach können die im vorstehenden Abschnitt erläuterten dargestellten Schritte sinngemäss am zweiten bzw. nacheilenden Kabelende vorgenommen werden.

Falls das zu konfektionierende Kabel zusätzlich zur Crimpverbindung eine Tülle aufweisen soll, wird das Verfahren wie folgt angepasst: Sobald sich das Kabel während des Zuführens des Kabels zur Crimpstation in einem bestimmten Winkelbereich vor oder nach der Tüllenstation 3 befindet, also wenn das Kabelende die Tüllenstation 3 passiert, kann der Bediener den Zuführvorgang durch Loslassen der Kabelruftaste 12 und/oder der Zustimmtaste 13 unterbrechen, wodurch der Steuerung signalisiert wird, dass das Tüllenmodul eingerichtet werden soll. Das Erreichen dieses Winkelbereiches kann durch Einschalten eines Leuchtelementes oder eines anderen Anzeigemittels der Tüllenstation 3 angezeigt werden. Ist dieser "Zwischenstopp" erfolgt, wird das Kabel automatisch in die für die Tüllenbestückung zuletzt abgespeicherte Position gebracht. Der Bediener kann nun lokal an der Tüllenstation 3 den Bestückungsvorgang durch Drücken einer Auslösetaste 22 ausführen oder die Tüllenstation 3 einrichten. Nach Beendigung des Einrichtvorgangs an der Tüllenstation 3 kann anschliessend durch Drücken der Kabelruftaste 12 und der Zustimmtaste 13 an der Crimpstation 4 das Kabel zur Presse gebracht werden, worauf das Einrichteprozedere an der Crimpstation 4 wie vorgängig beschrieben fortgesetzt werden kann.

## Patentansprüche

1. Kabelbearbeitungseinrichtung (1) zur Konfektionierung von Kabeln mit Bearbeitungsstationen (2, 3, 4) zum Bearbeiten von Kabelenden der Kabel und einer zentralen Bedieneinheit (6), über die wenigstens in Bezug auf den Produktionsbetrieb die Bearbeitungsstationen (2, 3, 4) ansteuerbar und kontrollierbar sind, **dadurch gekennzeichnet, dass** wenigstens eine der Bearbeitungsstationen (2, 3, 4) eine lokale Bedieneinheit (10) zum lokalen Einrichten der jeweiligen Bearbeitungsstation (2, 3, 4) aufweist, welche es ermöglicht, einzelne Bearbeitungsprozesse testweise durchzuführen.

2. Kabelbearbeitungseinrichtung (1) nach Anspruch 1, **dadurch gekennzeichnet, dass** eine lokale Bedieneinheit (10) wenigstens einer der Bearbeitungsstationen (2, 3, 4) Eingabemittel (13) zum Zustimmen, ob ein Bearbeitungsprozess ausgeführt werden soll, umfasst.

3. Kabelbearbeitungseinrichtung (1) nach Anspruch 2, **dadurch gekennzeichnet, dass** die Eingabemittel (13) zum Zustimmen, ob ein Bearbeitungsprozess ausgeführt werden soll, derart örtlich von Eingabemitteln (11) zum Auslösen des Bearbeitungsprozesses getrennt sind, dass die vorerwähnten Eingabemittel (11, 13) nicht gleichzeitig von einer Hand anwählbar sind.

4. Kabelbearbeitungseinrichtung (1) nach Anspruch 3, **dadurch gekennzeichnet, dass** die Eingabemittel (13) zum Zustimmen, ob ein Bearbeitungsprozess ausgeführt werden soll und die Eingabemittel (11) zum Auslösen des Bearbeitungsprozesses um wenigstens 27 cm voneinander entfernt sind.

5. Kabelbearbeitungseinrichtung (1) nach einem der Ansprüche 1 bis 4, **dadurch gekennzeichnet, dass** eine lokale Bedieneinheit (10) wenigstens einer der Bearbeitungsstationen (2, 3, 4) Eingabemittel (13) zum Zustimmen, ob ein Bearbeitungsprozess ausgeführt werden soll und Eingabemittel (11) zum Auslösen des Bearbeitungsprozess umfasst, wobei nur bei gleichzeitigem Anwählen von Eingabemitteln (13) zum Zustimmen, ob der Bearbeitungsprozess ausgeführt werden soll, und Eingabemitteln (11) zum Auslösen des Bearbeitungsprozesses der Bearbeitungsprozess in der jeweiligen Bearbeitungsstation (2, 3, 4) startbar ist.

6. Kabelbearbeitungseinrichtung (1) nach einem der Ansprüche 2 bis 5, **dadurch gekennzeichnet, dass** die Kabelbearbeitungseinrichtung (1) als Bearbeitungsstation eine Crimpstation (4) zur Herstellung einer Crimpverbindung mit einer Crimppresse (7) enthält und dass die Crimpstation (4) Eingabemittel (13) zum Zustimmen, ob ein Bearbeitungsprozess ausgeführt werden soll, umfasst.

7. Kabelbearbeitungseinrichtung (1) nach einem der Ansprüche 1 bis 6, **dadurch gekennzeichnet, dass** eine lokale Bedieneinheit (10) wenigstens einer der Bearbeitungsstationen (2, 3, 4) jeweils Eingabemittel (12) zum Ansteuern einer Zuführeinheit (8) zum Zuführen eines Kabelendes des Kabels zur jeweiligen Bearbeitungsstation (4) umfasst.

8. Kabelbearbeitungseinrichtung (1) nach Anspruch 7, **dadurch gekennzeichnet, dass** die Zuführeinheit (8) einen um eine vertikale Achse drehbare Schwenkeinheit (5) mit einem Greifer (9) umfasst oder dass die Zuführeinheit (8) eine Transfereinheit mit einem entlang einer Maschinenlängsachse bewegbaren Greifer zum Transportieren des Kabels umfasst.

9. Kabelbearbeitungseinrichtung (1) nach Anspruch 7 oder 8, **dadurch gekennzeichnet, dass** die Kabelbearbeitungseinrichtung (1) als Bearbeitungsstation eine Crimpstation (4) zur Herstellung einer Crimpverbindung mit einer Crimppresse (7) enthält und dass die Crimpstation (4) eine lokale Bedieneinheit (10) mit Eingabemitteln (14) zum Einstellen der axialen und/oder horizontalen Position eines ein Kabelende des Kabels haltenden Greifers (9) einer Zuführeinheit (8) in der Crimppresse der Crimpstation (4) umfasst.

10. Kabelbearbeitungseinrichtung (1) nach einem der Ansprüche 1 bis 9, **dadurch gekennzeichnet, dass** wenigstens ein Bereich der Kabelbearbeitungseinrichtung (1) mit einer Schutzhaube gesichert oder sicherbar ist und dass optische oder akustische Warn- und Benutzerführungselemente (17) vorgesehen sind, die anzeigen, wenn sich die Schutzhaube in einer Offenstellung befindet und die gegebenenfalls, falls optische Warn- und Benutzerführungselemente (17) vorgesehen sind, wenigstens einen Teilbereich des erwähnten Bereichs der Kabelbearbeitungseinrichtung beleuchten.

11. Kabelbearbeitungseinrichtung (1) nach einem der Ansprüche 1 bis 10, **dadurch gekennzeichnet, dass** eine lokale Bedieneinheit (10) wenigstens einer der Bearbeitungsstationen (2, 3, 4) über Anzeigemittel (15, 16) zum Anzeigen von Betriebszuständen verfügt.

12. Kabelbearbeitungseinrichtung (1) nach Anspruch 11, **dadurch gekennzeichnet, dass** die Anzeigemittel Leuchtelemente (15, 16) zum Anzeigen eines Bereitschaftsmodus und der Anwesenheit des Kabels, in dem die jeweilige Bearbeitungsstation (2, 3, 4) zum Einrichten bereit ist, und zum Anzeigen einer Fehlermeldung enthalten, wobei die Leuchtelemente (15, 16) bei Vorliegen des Bereitschaftsmodus oder bei einer Fehlermeldung unterschiedlich leuchten.

13. Verfahren für den Betrieb einer Kabelbearbeitungseinrichtung (1) zur Konfektionierung von Kabeln mit Bearbeitungsstationen (2, 3, 4) zum Bearbeiten von Kabelenden der Kabel unter Verwendung der Kabelbearbeitungseinrichtung (1) gemäss einem der Ansprüche 1 bis 12, **dadurch gekennzeichnet, dass** wenigstens eine der Bearbeitungsstationen (2, 3, 4) mittels einer an der jeweiligen Bearbeitungsstation (2, 3, 4) vorhandenen lokalen Bedieneinheit (10) lokal eingerichtet wird.

14. Verfahren nach Anspruch 13, **dadurch gekennzeichnet, dass** nach oder durch Betätigen eines an wenigstens einer der Bearbeitungsstation (2, 3, 4) angeordneten Eingabemittels (12) einer lokalen Bedieneinheit (10) zum Ansteuern einer Zuführeinheit (8) zum Zuführen eines Kabelendes des Kabels zur jeweiligen Bearbeitungsstation (4) heran geführt wird.

15. Verfahren nach Anspruch 14, **dadurch gekennzeichnet, dass** wenn das Kabelende beim Zuführvorgang zum Zuführen des Kabelendes zur jeweiligen Bearbeitungsstation (4) eine vorgelagerte Bearbeitungsstation (3) passiert, durch Einwirken auf das Eingabemittel (12) der Zuführvorgang gestoppt und das Kabelende zur vorgelagerten Bearbeitungsstation (3) heran geführt wird.

## Claims

1. Cable processing device (1) for assembling cables, comprising processing stations (2, 3, 4) for processing cable ends of the cables and a central operating unit (6), by means of which the processing stations (2, 3, 4) can be activated and controlled at least with regard to the production operation, **characterized in that** at least one of the processing stations (2, 3, 4) has a local operating unit (10) for locally setting up the particular processing station (2, 3, 4), which makes it possible to carry out individual processing processes on a test basis.

2. Cable processing device (1) according to claim 1, **characterized in that** a local operating unit (10) of at least one of the processing stations (2, 3, 4) comprises input means (13) for agreeing whether a processing process should be performed.

3. Cable processing device (1) according to claim 2, **characterized in that** the input means (13) for agreeing whether a processing process should be performed are locally separated from input means (11) for triggering the processing process in such a way that the aforementioned input means (11, 13) cannot be selected simultaneously with one hand.

4. Cable processing device (1) according to claim 3, **characterized in that** the input means (13) for agreeing whether a processing process should be performed and the input means (11) for triggering the processing process are at least 27 cm apart from one another.

5. Cable processing device (1) according to any of claims 1 to 4, **characterized in that** a local operating unit (10) of at least one of the processing stations (2, 3, 4) comprises input means (13) for agreeing whether a processing process should be performed and input means (11) for triggering the processing process, it being possible to start the processing process in the particular processing station (2, 3, 4) only if input means (13) for agreeing whether the processing process should be performed and input means (11) for triggering the processing process are selected simultaneously.

6. Cable processing device (1) according to any of claims 2 to 5, **characterized in that** the cable processing device (1) includes, as a processing station, a crimping station (4) for producing a crimp connection, said crimping station comprising a crimping press (7), and **in that** the crimping station (4) comprises input means (13) for agreeing whether a processing process should be performed.

7. Cable processing device (1) according to any of claims 1 to 6, **characterized in that** a local operating unit (10) of at least one of the processing stations (2, 3, 4) in each case comprises input means (12) for activating a feed unit (8) for feeding a cable end of the cable to the particular processing station (4).

8. Cable processing device (1) according to claim 7, **characterized in that** the feed unit (8) comprises a swivel unit (5) which is rotatable about a vertical axis and comprises a gripper (9), or **in that** the feed unit (8) comprises a transfer unit comprising a gripper for transporting the cable, which gripper is movable along a machine longitudinal axis.

9. Cable processing device (1) according to claim 7 or 8, **characterized in that** the cable processing device (1) includes, as a processing station, a crimping station (4) for producing a crimp connection, said crimping station comprising a crimping press (7), and **in that** the crimping station (4) comprises a local operating unit (10) comprising input means (14) for adjusting the axial and/or horizontal position of a gripper (9) of a feed unit (8) in the crimping press of the crimping station (4), which gripper holds a cable end of the cable.

10. Cable processing device (1) according to any of claims 1 to 9, **characterized in that** at least one region of the cable processing device (1) is secured or can be secured to a protective hood, and **in that** optical or acoustic warning and user guidance elements (17) are provided, which indicate when the protective hood is in an open position and which, where applicable, if optical warning and user guidance elements (17) are provided, illuminate at least a partial region of the aforementioned region of the cable processing device.

11. Cable processing device (1) according to any of claims 1 to 10, **characterized in that** a local operating unit (10) of at least one of the processing stations (2, 3, 4) has indicator means (15, 16) for indicating operating states.

12. Cable processing device (1) according to claim 11, **characterized in that** the indicator means include lighting elements (15, 16) for indicating a standby mode and the presence of the cable, indicating that the particular processing station (2, 3, 4) is ready for setup, and for indicating a fault report, the lighting elements (15, 16) being differently lit when the standby mode is present or in the event of a fault report.

13. Method for operating a cable processing device (1) for assembling cables, said cable processing device comprising processing stations (2, 3, 4) for processing cable ends of the cables, said method using the cable processing device (1) according to any of claims 1 to 12, **characterized in that** at least one of the processing stations (2, 3, 4) is set up locally by means of a local operating unit (10) provided on the particular processing station (2, 3, 4).

14. Method according to claim 13, **characterized in that** after actuation or by actuation of an input means (12), which is arranged on at least one of the processing stations (2, 3, 4), of a local operating unit (10) for activating a feed unit (8) for feeding a cable end of the cable is brought to the particular processing station (4).

15. Method according to claim 14, **characterized in that** if, during the feeding process for feeding the cable end to the particular processing station (4), the cable end passes an upstream processing station (3), the feeding operation is stopped and the cable end is brought to the upstream processing station (3) by means of action on the input means (12).

## Revendications

1. Dispositif de traitement de câbles (1) destiné au surmoulage de câbles, comportant des stations de traitement (2, 3, 4) destinées au traitement des extrémités des câbles, et une unité de commande centrale (6) par l'intermédiaire de laquelle les stations de traitement (2, 3, 4) peuvent être commandées et contrôlées par rapport au mode de production, **caractérisé en ce qu'**au moins l'une des stations de traitement (2, 3, 4) présente une unité de commande locale (10) permettant de configurer localement la station de traitement (2, 3, 4) respective, ce qui permet d'effectuer des processus de traitement individuels à titre d'essai.

2. Dispositif de traitement de câbles (1) selon la revendication 1, **caractérisé en ce qu'**une unité de commande locale (10) d'au moins l'une des stations de traitement (2, 3, 4) comprend des moyens d'entrée (13) permettant de déterminer si un processus de traitement doit être exécuté.

3. Dispositif de traitement de câbles (1) selon la revendication 2, **caractérisé en ce que** les moyens d'entrée (13) permettant de déterminer si un processus de traitement doit être exécuté sont localement séparés de moyens d'entrée (11) permettant de déclencher le processus de traitement, de telle sorte que les moyens d'entrée (11, 13) susmentionnés ne peuvent pas être sélectionnés simultanément d'une main.

4. Dispositif de traitement de câbles (1) selon la revendication 3, **caractérisé en ce que** les moyens d'entrée (13) permettant de déterminer si un processus de traitement doit être exécuté, et les moyens d'entrée (11) permettant de déclencher le processus de traitement sont espacés d'au moins 27 cm.

5. Dispositif de traitement de câbles (1) selon l'une des revendications 1 à 4, **caractérisé en ce qu'**une unité de commande locale (10) d'au moins l'une des stations de traitement (2, 3, 4) comprend des moyens d'entrée (13) permettant de déterminer si un processus de traitement doit être exécuté, et des moyens d'entrée (11) permettant de déclencher le processus de traitement, le processus de traitement dans la station de traitement (2, 3, 4) respective pouvant être démarré uniquement lorsque les moyens d'entrée (13) permettant de déterminer si un processus de traitement doit être exécuté et les moyens d'entrée (11) permettant de déclencher le processus de traitement sont sélectionnés simultanément.

6. Dispositif de traitement de câbles (1) selon l'une des revendications 2 à 5, **caractérisé en ce que** le dispositif de traitement de câbles (1) comporte une station de sertissage (4) en tant que station de traitement, laquelle station de sertissage permet d'établir une connexion de sertissage avec une presse de sertissage (7), et **en ce que** la station de sertissage (4) comprend des moyens d'entrée (13) permettant de déterminer si un processus de traitement doit être exécuté.

7. Dispositif de traitement de câbles (1) selon l'une des revendications 1 à 6, **caractérisé en ce qu'**une unité de commande locale (10) d'au moins l'une des stations de traitement (2, 3, 4) comprend respectivement des moyens d'entrée (12) permettant de commander une unité d'amenée (8) pour l'amenée d'une extrémité du câble vers la station de traitement (4) respective.

8. Dispositif de traitement de câbles (1) selon la revendication 7, **caractérisé en ce que** l'unité d'amenée (8) comprend une unité de pivotement (5) dotée d'un préhenseur (9) et pouvant tourner autour d'un axe vertical, ou **en ce que** l'unité d'amenée (8) comprend une unité de transfert dotée d'un préhenseur qui est mobile le long d'un axe longitudinal de la machine et permet le transport du câble.

9. Dispositif de traitement de câbles (1) selon la revendication 7 ou 8, **caractérisé en ce que** le dispositif de traitement de câbles (1) comporte, en tant que station de traitement, une station de sertissage (4) permettant d'établir une connexion de sertissage avec une presse de sertissage (7), et **en ce que** la station de sertissage (4) comprend une unité de commande locale (10) comportant des moyens d'entrée (14) permettant de régler la position axiale et/ou horizontale d'un préhenseur (9) d'une unité d'amenée (8) dans la presse de sertissage de la station de sertissage (4), lequel préhenseur maintient une extrémité du câble.

10. Dispositif de traitement de câbles (1) selon l'une des revendications 1 à 9, **caractérisé en ce qu'**au moins une zone du dispositif de traitement de câbles (1) est protégée ou peut être protégée avec un capot de protection, et **en ce que** des éléments (17) optiques ou acoustiques d'avertissement et de guidage d'utilisateur sont prévus, lesquels indiquent si le capot de protection est en position ouverte et éclairent éventuellement, au cas où des éléments optiques d'avertissement et de guidage d'utilisateur (17) sont prévus, au moins une partie de ladite zone du dispositif de traitement de câbles.

11. Dispositif de traitement de câbles (1) selon l'une des revendications 1 à 10, **caractérisé en ce qu'**une unité de commande locale (10) d'au moins l'une des stations de traitement (2, 3, 4) présente des moyens d'affichage (15, 16) permettant d'afficher des états de fonctionnement.

12. Dispositif de traitement de câbles (1) selon la revendication 11, **caractérisé en ce que** les moyens d'affichage comportent des éléments d'éclairage (15, 16) permettant d'afficher un mode veille et d'indiquer la présence du câble, mode veille dans lequel la station de traitement (2, 3, 4) respective est prête à être configurée, et permettant d'afficher un message d'erreur, les éléments d'éclairage (15, 16) éclairant différemment dans le cas du mode veille ou lors d'un message d'erreur.

13. Procédé de fonctionnement d'un dispositif de traitement de câbles (1) destiné au surmoulage de câbles et comportant des stations de traitement (2, 3,4) permettant de traiter les extrémités des câbles à l'aide du dispositif de traitement de câbles (1) selon l'une des revendications 1 à 12, **caractérisé en ce qu'**au moins l'une des stations de traitement (2, 3, 4) est configurée localement au moyen d'une unité de commande locale (10) disposée sur la station de traitement (2, 3, 4) respective.

14. Procédé selon la revendication 13, **caractérisé en ce que**, après ou par l'actionnement d'un moyen d'entrée (12) disposé sur au moins l'une des stations de traitement (2, 3, 4), une unité de commande locale (10) permettant de commander une unité d'amenée (8) pour l'amenée d'une extrémité du câble est guidée vers la station de traitement (4) respective.

15. Procédé selon la revendication 14, **caractérisé en ce que**, lorsque l'extrémité de câble passe par une station de traitement en amont (3) au cours du processus d'amenée pour l'amenée de l'extrémité de câble vers la station de traitement (4) respective, le processus d'amenée est interrompu en agissant sur le moyen d'entrée (12), et l'extrémité de câble est guidée vers la station de traitement (3) en amont.
